# FASCICULE DE BREVET EUROPEEN

(11) **EP 3 005 378 B1**
(45) Date de publication et mention de la délivrance du brevet: **21.08.2019**
(21) Numéro de dépôt: 14733245.6
(22) Date de dépôt: 03.06.2014
(51) Int. Cl.: H01B 3/40, H01B 3/44

(54) **DISPOSITIF ÉLECTRIQUE A MOYENNE OU HAUTE TENSION**
ELEKTRISCHE MITTEL- ODER HOCHSPANNUNGSVORRICHTUNG
MEDIUM- OR HIGH-VOLTAGE ELECTRIC DEVICE

(30) Priorité: 04.06.2013 FR 1355102; 01.10.2013 FR 1359471
(43) Date de publication de la demande: 13.04.2016
(73) Titulaire: Nexans, 92400 Courbevoie (FR)
(72) Inventeur: BRICENO GARCIA, Ruben, 69100 Villeurbanne (FR); MARTY, Jean-Michel, 69110 Sainte Foy Les Lyon (FR); THIVILLON, Maud, 69510 Thurins (FR); GOUTILLE, Yannick, 69100 Villeurbanne (FR); KEROMNES, Laurent, 69630 Chaponost (FR)
(74) Mandataire: Peguet, Wilfried
(86) Numéro de dépôt international: PCT/FR2014/051317
(87) Numéro de publication internationale: WO 2014/195629

(56) Documents cités:
- EP-A1- 2 444 455
- EP-A1- 2 444 980

## Description

La présente invention se rapporte à un dispositif électrique du type câble électrique ou accessoire pour câble électrique. Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles d'énergie comprennent typiquement un conducteur électrique central et au moins une couche électriquement isolante réticulée par des techniques bien connues de l'homme du métier, notamment par voie peroxyde.

La voie peroxyde tend de plus en plus à être évitée par rapport aux produits de décomposition du peroxyde, présentant des inconvénients lors de la fabrication du câble, voire même une fois le câble en configuration opérationnelle. En effet, lors de la réticulation, les peroxydes se décomposent et forment des sous-produits de réticulation tels que notamment du méthane, de l'acétophénone, de l'alcool cumylique, de l'acétone, du tertiobutanol, de l'alpha-méthyle styrène et/ou de l'eau. La formation d'eau à partir d'alcool cumylique est relativement lente et peut se produire après plusieurs mois, voire quelques années une fois que le câble est en configuration opérationnelle. Le risque de claquage des couches réticulées est ainsi augmenté de façon significative. En outre, si le méthane formé au cours de l'étape de réticulation n'est pas évacué des couches réticulées, des risques liés à l'explosivité du méthane et sa capacité à s'enflammer ne doivent pas être ignorés. Ce gaz peut également occasionner des dégâts une fois le câble mis en service. Même si des solutions existent pour limiter la présence de méthane au sein du câble, telles que par exemple traiter le câble thermiquement afin d'accélérer la diffusion de méthane en dehors du câble, elles deviennent longues et coûteuses lorsque l'épaisseur des couches réticulées est importante.

On connaît le document US-4 826 726 qui décrit un conducteur électrique résistant à la chaleur, entouré par une couche réticulée obtenue à partir d'une composition comprenant un copolymère éthylénique comprenant une fonction oxirane, et un composé polymérique en tant qu'agent de réticulation, du type copolymère d'éthylène et d'anhydride d'acide dicarboxylique insaturé.

Le but de la présente invention est de pallier les inconvénients des techniques de l'art antérieur en proposant un dispositif électrique du type câble électrique ou accessoire pour câble électrique, comprenant une couche réticulée dont la fabrication limite de façon significative la présence de sous-produits de réticulation, comme par exemple le méthane et/ou l'eau, tout en garantissant des propriétés thermomécaniques optimales, telles que le fluage à chaud, caractéristiques de la bonne réticulation de ladite couche, et notamment une résistance au claquage électrique améliorée de façon significative.

La présente invention a pour objet un dispositif électrique comprenant une couche réticulée obtenue à partir d'une composition polymère comprenant au moins un polymère comprenant au moins une fonction époxy, caractérisé en ce que la composition polymère comprend en outre un composé non polymérique en tant qu'agent de réticulation comprenant au moins une fonction réactive apte à réagir avec la fonction époxy dudit polymère pour permettre la réticulation dudit polymère, l'agent de réticulation étant tel que défini dans la revendication 1.

Grâce à l'invention, la couche réticulée permet d'éviter l'utilisation de peroxyde organique, tout en garantissant un haut niveau de réticulation.

En outre, la couche réticulée de l'invention présente l'avantage d'être économique, facile à mettre en oeuvre, notamment par extrusion, et à fabriquer, puisqu'elle ne nécessite pas de recourir à des procédés contraignants de dégazage.

Selon un premier mode de réalisation, le dispositif selon l'invention est un câble électrique comprenant un élément électriquement conducteur allongé, entouré par ladite couche réticulée.

Selon un deuxième mode de réalisation, le dispositif selon l'invention est un accessoire pour câble électrique, ledit accessoire comprenant ladite couche réticulée. Ledit accessoire est plus particulièrement destiné à être associé à au moins un câble électrique, ladite couche réticulée étant destinée à entourer au moins une extrémité d'un câble électrique. L'accessoire peut être notamment une jonction ou une terminaison, pour câble électrique.

La fonction époxy (i.e. fonction époxyde) du polymère est plus particulièrement une fonction oxirane (i.e. un groupement d'oxyde d'éthylène).

De préférence, la fonction époxy peut être apportée par un composé comprenant ladite fonction époxy, ce composé pouvant être choisi parmi les esters de glycidyle. Ainsi, le polymère de l'invention peut comprendre des groupements d'ester de glycidyle.

Le polymère de l'invention peut comprendre au plus 10% en poids de fonction époxy, et de préférence au plus 5% en poids de fonction époxy.

Le polymère de l'invention peut comprendre au moins 0,1 % en poids de fonction époxy, et de préférence au moins 1% en poids de fonction époxy.

Selon une première variante, la fonction époxy peut être greffée sur le polymère. Le polymère comprenant au moins une fonction époxy de l'invention est, selon cette première variante, un polymère greffé époxy. En d'autres termes, le polymère selon l'invention peut être un polymère comprenant au moins une fonction époxy greffée sur la chaine macromoléculaire (i.e. chaîne principale ou « backbone ») dudit polymère. Les extrémités de la chaîne macromoléculaire du polymère peuvent être quant à elles greffées ou non avec la fonction époxy.

Selon une deuxième variante, le polymère comprenant au moins une fonction époxy de l'invention peut être un copolymère obtenu à partir d'au moins deux monomères, l'un des deux monomères comprenant ladite fonction époxy. Ledit monomère comprenant ladite fonction époxy peut être choisi parmi les composés suivants : monoglycidylester d'acide butène carboxylique, méthacrylate de glycidyle, acrylate de glycidyle, acrylate de méthylglycidyle, méthacrylate de méthylglycidyle, glycidester d'acide itaconique, méthacrylate de 7,8-epoxy-1-octyl, méthylglycidester d'acide itaconique, éther vinylique 7,8-epoxy-1-octyl, éther glycidylique de vinyle, éther allylglycidique et éther glycidylique de 2-methyl-2-propenyl.

A titre d'exemple, on peut citer comme polymère comprenant au moins une fonction époxy le copolymère d'éthylène et de méthacrylate de glycidyle.

Le polymère de l'invention est plus particulièrement un polymère organique, permettant notamment de mettre en forme par extrusion la composition polymère.

Le polymère peut comprendre au moins une polyoléfine. Le terme « polyoléfine » en tant que tel signifie de façon générale polymère d'oléfine du type homopolymère ou copolymère d'oléfine. De préférence, ledit polymère d'oléfine est un polymère d'oléfine non cyclique.

Dans la présente invention, on préférera utiliser un polymère d'éthylène (homo- ou copolymère d'éthylène) ou un polymère de propylène (homo- ou copolymère de propylène).

La première variante de l'invention pourra être utilisée avec un homopolymère d'oléfine greffé époxy ou un copolymère d'oléfine greffé époxy.

La seconde variante de l'invention pourra être utilisée avec un copolymère obtenu à partir d'un monomère d'oléfine et d'un monomère comprenant au moins une fonction époxy, tel que décrit ci-avant.

La composition polymère de l'invention peut comprendre plus de 50,0 parties en poids de polymère comprenant au moins une fonction époxy, pour 100 parties en poids de polymère(s) (i.e. matrice polymère) dans la composition polymère ; de préférence au moins 70 parties en poids de polymère comprenant au moins une fonction époxy, pour 100 parties en poids de polymère(s) dans ladite composition polymère ; et de façon particulièrement préférée au moins 90 parties en poids de polymère comprenant au moins une fonction époxy, pour 100 parties en poids de polymère(s) dans ladite composition polymère.

De façon particulièrement avantageuse, le ou les polymères constitutifs de la composition polymère sont uniquement un ou des polymère(s) à base d'oléfine (i.e. homopolymère et/ou copolymère d'oléfine).

Dans un mode de réalisation particulier, le polymère de l'invention peut comprendre en outre au moins une fonction acrylate. Cette fonction acrylate permet avantageusement d'assouplir et de rendre plus flexible le polymère de l'invention.

Selon une première variante, la fonction acrylate peut être greffée sur le polymère de l'invention. Le polymère de l'invention est, selon cette première variante, un polymère greffé acrylate. En d'autres termes, le polymère selon l'invention peut être un polymère comprenant au moins une fonction acrylate greffée sur la chaine macromoléculaire (i.e. chaîne principale ou *« backbone* ») dudit polymère. Les extrémités de la chaîne macromoléculaire du polymère peuvent être quant à elles greffées ou non avec la fonction acrylate.

Selon une deuxième variante, le polymère de l'invention peut être un copolymère obtenu à partir d'au moins deux monomères, l'un des deux monomères comprenant ladite fonction acrylate. On peut citer à titre d'exemple le terpolymère d'éthylène, d'acrylate de méthyle et de méthacrylate de glycidyle.

Le composé non polymérique de l'invention (i.e. agent de réticulation) est un composé organique différent d'un polymère. En d'autres termes, l'agent de réticulation n'est notamment pas issu de l'enchaînement covalent d'un grand nombre de motifs monomères identiques ou différents. Plus particulièrement, l'agent de réticulation n'est pas issu de l'enchaînement covalent d'au moins deux motifs monomères identiques ou différents.

La ou les fonction(s) réactive(s) du composé non polymérique est/sont apte(s) à réagir avec la fonction époxy dudit polymère pour permettre la réticulation dudit polymère. Elle va réagir directement ou indirectement sur la fonction époxy après ouverture de l'époxy lors d'une élévation de température.

La fonction réactive du composé non polymérique peut être choisie parmi une fonction anhydride, une fonction carboxyle et une fonction amine.

Plus particulièrement, l'agent de réticulation peut être avantageusement choisi parmi :
- un composé non polymérique comprenant au moins une fonction amine et au moins une fonction carboxyle,
- un composé non polymérique comprenant au moins une fonction anhydride et un catalyseur de réticulation, et
- un de leurs mélanges.

En effet, ces deux types d'agent de réticulation permettent d'obtenir des couches réticulées avec de faibles quantités d'agent de réticulation, tout en garantissant une très bonne résistance au claquage selon la norme IEC 62539 ou une très bonne résistivité électrique selon la norme IEC 60840, et une température de réticulation de la composition polymère relativement basse (notamment inférieure à 300°C, et de préférence inférieure ou égale à 250°C) afin de limiter la dégradation du polymère comprenant une fonction epoxy.

Lorsque le composé non polymérique comprend au moins une fonction amine, la fonction amine est une amine primaire ou secondaire.

Dans un mode de réalisation particulier, le composé non polymérique peut comprendre au moins deux fonctions réactives. Ces au moins deux fonctions réactives peuvent être identiques ou différentes, et choisies indifféremment parmi une fonction anhydride, une fonction carboxyle et une fonction amine. De préférence, le composé non polymérique peut comprendre deux fonctions réactives différentes.

Selon un premier mode de réalisation préféré de l'invention, le composé non polymérique peut comprendre une fonction amine et une fonction carboxyle. A titre d'exemple, le composé non polymérique est un acide aminé.

Les acides aminés comprennent ainsi deux fonctions : la fonction carboxyle -COOH, et la fonction amine qui est de préférence du type amine primaire -NH₂.

La chaîne carbonée séparant la fonction carboxyle de la fonction amine peut comprendre de 1 à 50 atomes de carbone, et de préférence de 1 à 20 atomes de carbone.

Classiquement, les fonctions carboxyle et amine peuvent être positionnées aux extrémités de la chaîne carbonée principale dudit acide aminé, la chaîne carbonée principale étant de préférence une chaîne non ramifiée.

A titre d'exemple, on peut citer l'acide amino 11 undécanoïque.

L'acide aminé peut également être un acide alpha-aminé se définissant par le fait que la fonction amine est liée à l'atome de carbone adjacent à la fonction carboxyle (le carbone alpha).

Selon un deuxième mode de réalisation préféré de l'invention, le composé non polymérique peut comprendre au moins une fonction anhydride. Dans ce cas, lorsque l'agent de réticulation est un composé non polymérique comprenant une fonction anhydride, la composition comprend en outre un catalyseur de réticulation.

Le composé non polymérique comprenant une fonction anhydride est plus particulièrement un composé organique. En d'autres termes, le composé non polymérique comprenant une fonction anhydride est constitué uniquement de carbone, et d'hydrogène, et optionnellement d'oxygène.

Plus particulièrement, ledit composé non polymérique comprenant une fonction anhydride, comprend en outre une chaine aliphatique comprenant au moins 5 atomes de carbone, cette chaîne pouvant être saturée ou insaturée.

A titre d'exemple, on peut citer l'anhydride dodecenyle succinique.

La composition polymère conforme à l'invention peut comprendre une quantité d'agent de réticulation en quantité nécessaire et suffisante pour obtenir la couche réticulée.

A titre d'exemple, la composition polymère peut comprendre au plus 15,0 parties en poids d'agent de réticulation pour 100 parties en poids de polymère(s), de préférence au plus 10,0 parties en poids d'agent de réticulation pour 100 parties en poids de polymère(s), et de préférence au plus 5,0 parties en poids d'agent de réticulation pour 100 parties en poids de polymère(s).

La composition polymère conforme à l'invention peut comprendre au moins 0,1 partie en poids d'agent de réticulation pour 100 parties en poids de polymère(s), et de préférence au moins 0,5 parties en poids d'agent de réticulation pour 100 parties en poids de polymère(s).

La composition polymère de l'invention peut en outre comprendre une charge.

La charge de l'invention peut être une charge minérale ou organique. Elle peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH). Ces charges ignifugeantes agissent principalement par voie physique en se décomposant de manière endothermique (e.g. libération d'eau), ce qui a pour conséquence d'abaisser la température de la couche réticulée et de limiter la propagation des flammes le long du dispositif électrique. On parle notamment de propriétés de retard à la flamme, bien connues sous l'anglicisme « *flame retardant ».*

La charge inerte peut être, quant à elle, de la craie, du talc, de l'argile (e.g. le kaolin), ou du noir de carbone.

Le noir de carbone pourra être préféré pour obtenir une couche réticulée semi-conductrice, et pourra être introduit dans la composition polymère en une quantité suffisante pour rendre la composition semi-conductrice.

La composition polymère peut comprendre au moins 20 parties en poids de charge pour 100 parties en poids de polymère dans la composition, de préférence au moins 30 parties en poids de charge pour 100 parties en poids de polymère dans la composition, et encore plus préférentiellement au moins 40 parties en poids de charge pour 100 parties en poids de polymère dans la composition.

L'ajout d'une charge telle que décrite dans l'invention peut entraîner une élévation de température lors de la mise en oeuvre de la composition polymère, et de ce fait induire une réticulation prématurée de la composition polymère. Ainsi, pour éviter toute réticulation prématurée de la composition polymère, il est préférable que l'ajout de la charge soit réalisé de façon à ce qu'il n'y ait pas de réticulation prématurée de la composition polymère lors de sa mise en oeuvre. Plus particulièrement, l'agent de réticulation peut être avantageusement ajouté à la composition polymère dans une étape distincte et postérieure à celle de l'ajout de la charge.

Selon une autre caractéristique de l'invention, et afin de garantir un dispositif électrique dit HFFR pour l'anglicisme « *Halogen-Free Flame Retardant* », le dispositif électrique, ou en d'autres termes les éléments qui composent ledit dispositif électrique, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

La composition polymère peut typiquement comprendre en outre des additifs en une quantité de 5 à 20 parties en poids pour 100 parties en poids de polymère dans la composition. Les additifs sont bien connus de l'homme du métier et peuvent être par exemple choisis parmi des agents de protection (antioxydants, des anti-UV, anti-cuivre), des agents de mise en oeuvre (plastifiants ou lubrifiants), et des pigments.

Comme mentionné précédemment, la composition polymère peut également comprendre un catalyseur de réticulation afin d'aider à la réticulation. Ce catalyseur de réticulation peut être plus particulièrement utilisé lorsque l'agent de réticulation non polymérique de l'invention comprend une fonction réactive du type anhydride.

Le catalyseur de réticulation peut être un catalyseur du type base de Lewis, ou en d'autre termes une entité chimique nucléophile dont un des constituants possède un doublet ou plus d'électrons libres ou non liants sur sa couche de valence.

A titre d'exemple, le catalyseur de réticulation peut être choisi parmi des imides, des amines tertiaires, des imidazoles, et un de leurs mélanges.

Les catalyseurs de réticulation de type phénolique seront préférés dans le cadre de l'invention, ce catalyseur étant notamment une base de Lewis telle que par exemple le 2,4,6-tris(diméthylaminoéthyle) phénol.

Lorsque la composition polymère comprend un catalyseur de réticulation, notamment en présence d'un agent de réticulation non polymérique comprenant une fonction réactive du type anhydride, la composition polymère peut comprendre de 0,01 à 2,0 parties en poids de catalyseur de réticulation pour 100 parties en poids de polymère, et de préférence de 0,05 à 1,0 parties en poids de catalyseur de réticulation pour 100 parties en poids de polymère.

Dans la présente invention, la couche réticulée peut être facilement caractérisée par la détermination de son taux de gel selon la norme ASTM D2765-01. Plus particulièrement, ladite couche réticulée peut avoir avantageusement un taux de gel, selon la norme ASTM D2765-01, d'au moins 40%, de préférence d'au moins 50%, de préférence d'au moins 60%, et de façon particulièrement préférée d'au moins 70%.

La couche réticulée peut être également caractérisée par la norme NF EN 60811-2-1 (ou « Hot Set Test ») avec un fluage à chaud sous charge (allongement en pourcentage) d'au plus 175%.

Selon un premier mode de réalisation, la couche réticulée de l'invention peut être une couche électriquement isolante. La couche réticulée de ce premier mode de réalisation présente en outre avantageusement une résistance au claquage électrique améliorée de façon significative.

Plus particulièrement, on entend par « couche électriquement isolante » une couche dont la conductivité électrique peut être d'au plus 1.10⁻⁹ S/m (siemens par mètre) (à 25°C).

Lorsque le dispositif électrique de l'invention est un câble électrique, au moins deux variantes de ce premier mode de réalisation sont possibles.

Selon une première variante du premier mode de réalisation, la couche réticulée de l'invention est directement en contact physique avec l'élément électriquement conducteur allongé. On parle dans ce cas notamment de câble basse tension.

La composition polymère utilisée pour former le câble basse tension comprend préférentiellement au moins une charge, telle que définie précédemment dans l'invention.

En outre, le polymère de l'invention peut comprendre avantageusement ladite fonction acrylate.

Selon une deuxième variante du premier mode de réalisation, le câble électrique de l'invention comprend en outre une première couche semi-conductrice et une deuxième couche semi-conductrice, la première couche semi-conductrice entourant l'élément électriquement conducteur allongé, la couche électriquement isolante entourant la première couche semi-conductrice, et la deuxième couche semi-conductrice entourant la couche électriquement isolante. On parle dans ce cas notamment de câble moyenne ou haute tension.

La composition polymère utilisée pour former le câble moyenne ou haute tension ne comprend préférentiellement pas de charge. En outre, le polymère de l'invention peut avantageusement ne pas comprendre ladite fonction acrylate.

Selon un deuxième mode de réalisation, la couche réticulée de l'invention peut être une couche semi-conductrice. Par conséquent, la composition polymère de l'invention peut comprendre en outre une charge électriquement conductrice en une quantité suffisante pour rendre la composition polymère semi-conductrice. On peut citer par exemple comme charge électriquement conductrice du noir de carbone.

Plus particulièrement, on entend par « couche semi-conductrice » une couche dont la conductivité électrique peut être d'au moins 1.10⁻⁹ S/m (siemens par mètre), de préférence d'au moins 1.10⁻³ S/m, et de préférence peut être inférieure à 1.10³ S/m (à 25°C).

Lorsque le dispositif électrique de l'invention est un câble électrique, ce dernier peut comprendre une première couche semi-conductrice entourant l'élément électriquement conducteur allongé, une couche électriquement isolante entourant la première couche semi-conductrice, et une deuxième couche semi-conductrice entourant la couche électriquement isolante, la couche réticulée de l'invention étant au moins l'une de ces trois couches, de préférence au moins deux desdites trois couches, et de préférence lesdites trois couches. On parle dans ce cas notamment de câble moyenne ou haute tension.

Dans la présente invention, l'élément électriquement conducteur allongé du câble électrique peut être un fil métallique ou une pluralité de fils métalliques, torsadé(s) ou non, notamment en cuivre ou en aluminium, ou un de leurs alliages.

Lorsque le dispositif électrique de l'invention est un accessoire pour câble électrique, ledit accessoire entoure plus particulièrement au moins une extrémité d'un câble électrique, ladite extrémité étant celle qui est destinée à être associée audit accessoire.

L'accessoire peut être typiquement un corps longitudinal creux, tel que par exemple une jonction ou une terminaison pour câble électrique, dans lequel au moins une partie d'un câble électrique est destinée à être positionnée.

L'accessoire comporte au moins un élément semi-conducteur et au moins un élément électriquement isolant, ces éléments étant destinés à entourer une extrémité d'un câble électrique. L'élément semi-conducteur est bien connu pour contrôler la géométrie du champ électrique, lorsque le câble électrique, associé audit accessoire, est sous tension.

La couche réticulée de l'invention peut être ledit élément semi-conducteur et/ou ledit élément électriquement isolant.

Lorsque l'accessoire est une jonction, cette dernière permet de connecter ensemble deux câbles électriques, la jonction entourant alors en partie ces deux câbles électriques. Plus particulièrement, l'extrémité de chaque câble électrique destiné à être connecté est positionnée à l'intérieur de ladite jonction.

Lorsque le dispositif de l'invention est une terminaison pour câble électrique, cette dernière entoure en partie un câble électrique. Plus particulièrement, l'extrémité du câble électrique destinée à être connecté est positionnée à l'intérieur de ladite terminaison.

La couche réticulée de l'invention peut être une couche extrudée ou une couche moulée, par des procédés bien connus de l'homme du métier. Lorsque le dispositif électrique est un câble électrique, la couche réticulée est de préférence une couche extrudée. Lorsque le dispositif électrique est un accessoire pour câble électrique, la couche réticulée est de préférence une couche moulée.

Un autre objet de l'invention concerne un procédé de fabrication d'un dispositif électrique du type câble électrique selon l'invention, caractérisé en ce qu'il comprend les étapes suivantes :
i. extruder la composition polymère autour d'un élément électriquement conducteur allongé pour obtenir une couche extrudée, et
ii. réticuler la couche extrudée de l'étape i.

L'étape i peut être réalisée par des techniques bien connues de l'homme du métier en utilisant une extrudeuse.

Lors de l'étape i, la température au sein de l'extrudeuse ne doit pas dépasser préférentiellement la température d'ouverture de la fonction époxy du polymère, afin d'éviter toute réticulation au sein de l'extrudeuse. A titre d'exemple, la température de mise en oeuvre par extrusion de la composition polymère est inférieure à 200°C, et de préférence inférieure à 150°C.

En sortie d'extrudeuse, on obtient donc une couche extrudée autour dudit élément électriquement conducteur, pouvant être ou non directement en contact physique avec ledit élément électriquement conducteur.

En sortie d'extrudeuse, la couche extrudée est donc une couche dite « non réticulée ».

On entend par « non réticulée » une couche dont le taux de gel selon la norme ASTM D2765-01 est d'au plus 20%, de préférence d'au moins 10%, de préférence d'au moins 5%, et de façon particulièrement préférée de 0%.

Préalablement à l'étape i, les composés constitutifs de la composition polymère de l'invention peuvent être mélangés, notamment avec le polymère à l'état fondu, afin d'obtenir un mélange homogène. La température au sein du mélangeur peut être suffisante pour obtenir un polymère à l'état fondu, mais est limitée pour éviter la réticulation du polymère.

Puis le mélange homogène est granulé, par des techniques bien connues de l'homme du métier. Ces granulés peuvent ensuite alimenter une extrudeuse pour réaliser l'étape i.

L'étape ii peut être réalisée par voie thermique, par exemple à l'aide d'un tube vapeur ou d'un bain de sel fondu, ces techniques étant bien connues de l'homme du métier. A titre d'exemple, la température de réticulation est inférieure à 300°C, et de préférence inférieure ou égale à 250°C.

En sortie d'extrudeuse, la composition extrudée sous forme de couche autour de l'élément électriquement conducteur peut ensuite être soumise à une température suffisante pour pouvoir ouvrir la fonction époxy du polymère, et ainsi faire réagir l'agent de réticulation avec la fonction époxy ouverte. On obtient alors une couche extrudée et réticulée.

D'autres caractéristiques et avantages de la présente invention apparaîtront à la lumière de la description d'un exemple non limitatif d'un câble électrique selon l'invention fait en référence aux figures.
La figure 1 représente une vue schématique en coupe transversale d'un câble électrique selon un mode de réalisation préféré conforme à l'invention.
La figure 2 représente une vue schématique d'un dispositif selon l'invention, comprenant une jonction en coupe longitudinale, cette jonction entourant l'extrémité de deux câbles électriques.
La figure 3 représente une vue schématique d'un dispositif selon une première variante de l'invention, comprenant une terminaison en coupe longitudinale, cette terminaison entourant l'extrémité d'un unique câble électrique.
La figure 4 présente les valeurs de résistance au claquage pour différents types d'agent de réticulation, pour des compositions polymères non chargées.
La figure 5 présente les valeurs de résistance au claquage pour différents types d'agent de réticulation, pour des compositions polymères chargées.

Pour des raisons de clarté, seuls les éléments essentiels pour la compréhension de l'invention ont été représentés de manière schématique, et ceci sans respect de l'échelle.

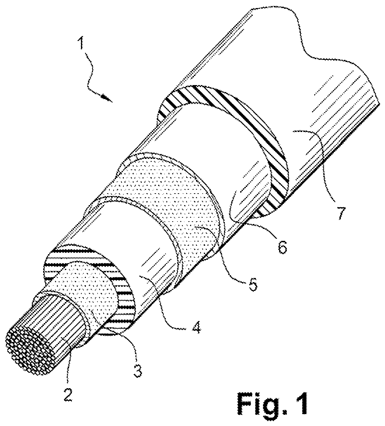

Le câble d'énergie 1 à moyenne ou haute tension, illustré dans la figure 1, comprend un élément conducteur 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée et réticulée, obtenue à partir de la composition polymère selon l'invention.

Les couches semi-conductrices sont également des couches extrudées et réticulées, pouvant être obtenues à partir de la composition polymère selon l'invention.

La présence de l'écran métallique 6 et de la gaine extérieure de protection 7 est préférentielle, mais non essentielle, cette structure de câble étant en tant que telle bien connue de l'homme du métier.

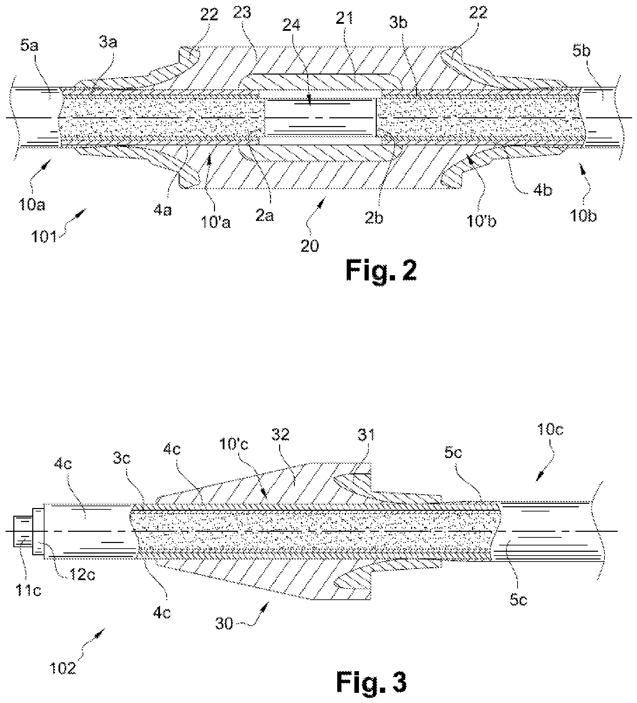

La figure 2 représente un dispositif 101 comprenant une jonction 20 entourant en partie deux câbles électriques 10a et 10b.

Plus particulièrement, les câbles électriques 10a et 10b comprennent respectivement une extrémité 10'a et 10'b, destinées à être entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b.

Cette jonction 20 permet de connecter électriquement le premier câble 10a au second câble 10b, notamment grâce à un connecteur électrique 24 disposé au centre de la jonction 20.

Au moins un des éléments choisis parmi le premier élément semi-conducteur 21, le second élément semi-conducteur 22 et ledit élément électriquement isolant 23, peut être une couche réticulée telle que décrite dans l'invention.

Le premier câble électrique 10a comprend un conducteur électrique 2a entouré par une première couche semi-conductrice 3a, une couche électriquement isolante 4a entourant la première couche semi-conductrice 3a, et une seconde couche semi-conductrice 5a entourant la couche électriquement isolante 4a.

Le second câble électrique 10b comprend un conducteur électrique 2b entouré par au moins une première couche semi-conductrice 3b, une couche électriquement isolante 4b entourant la première couche semi-conductrice 3b, et une seconde couche semi-conductrice 5b entourant la couche électriquement isolante 4b.

Ces câbles électriques 10a et 10b peuvent être ceux décrits dans la présente invention.

A ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

A l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

La figure 3 représente un dispositif 102 comprenant une terminaison 30 entourant un unique câble électrique 10c.

Plus particulièrement, le câble électrique 10c comprend une extrémité 10'c, destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

Au moins un des éléments choisi parmi l'élément semi-conducteur 31 et l'élément électriquement isolant 32 peut être une couche réticulée telle que décrite dans l'invention.

Le câble électrique 10c comprend un conducteur électrique 2c entouré par une première couche semi-conductrice 3c, une couche électriquement isolante 4c entourant la première couche semi-conductrice 3c, et une seconde couche semi-conductrice 5c entourant la couche électriquement isolante 4c.

Ce câble électrique 10c peut être celui décrit dans la présente invention.

A ladite extrémité 10'c du câble électrique 10c, la seconde couche semi-conductrice 5c est au moins partiellement dénudée afin que la couche électriquement isolante 4c soit au moins partiellement positionnée à l'intérieur de la terminaison 30, sans être recouverte de la seconde couche semi-conductrice 5c du câble.

A l'intérieur de la terminaison 30, la couche électriquement isolante 4c, est directement en contact physique avec l'élément électriquement isolant 32 de la terminaison 30. La deuxième couche semi-conductrice 5c est directement en contact physique avec l'élément semi-conducteur 31 de la jonction 30.

### Exemples

### 1. Compositions électriquement isolantes non chargées

Le tableau 1 ci-dessous rassemble des compositions réticulables non chargées dont les quantités des composés sont exprimées en parties en poids pour 100 parties en poids de polymère. Les compositions I10 et I20 sont conformes à l'invention.

**Tableau 1**

| Composition | C10 | C20 | C30 | C40 | I10 | I20 |
|---|---|---|---|---|---|---|
| Polymère/Epoxy | 60 | 100 | 100 | 100 | 100 | 100 |
| Terpolymère | 40 | 0 | 0 | 0 | 0 | 0 |
| Acide de Bronsted | 0 | 0,75 | 0 | 0 | 0 | 0 |
| Acide de Lewis | 0 | 0 | 0,75 | 0 | 0 | 0 |
| Anhydride | 0 | 0 | 0 | 3,75 | 0 | 3,75 |
| Acide aminé | 0 | 0 | 0 | 0 | 0,75 | 0 |
| Catalyseur | 0 | 0 | 0 | 0 | 0 | 0,12 |

L'origine des composés du tableau 1 est la suivante :
- Polymère/Epoxy est un copolymère d'éthylène et de méthacrylate de glycidyle (GMA), commercialisé par la société Arkema sous la référence Lotader AX8840, ce copolymère comprenant 8% en poids de GMA ;
- Terpolymère est un terpolymère d'éthylène, d'acrylate de méthyle et d'anhydride maléique, commercialisé par la société Arkema sous la référence Lotader 3430 ;
- Acide de Bronsted est un acide 4-méthylbenzènesulfonique commercialisé par la société SIGMA-ALDRICH sous la référence acide 4-méthylbenzènesulfonique ;
- Acide de Lewis est un Cuivre (II) acétyle acetonate commercialisé par la société SIGMA-ALDRICH sous la référence Cuivre (II) acétyle acetonate ;
- Anhydride est un anhydride dodecenyle succinique, commercialisé par la société SIGMA-ALDRICH sous la référence anhydride dodecenyle succinique ;
- Acide aminé est un acide amino 11 undécanoïque, commercialisé par la société SI GMA-ALDRICH sous la référence acide amino 11 undécanoïque ; et
- Catalyseur est le catalyseur phénolique 2,4,6-tris(diméthylaminoéthyle) phénol, commercialisé par la société SIGMA-ALDRICH sous la référence 2,4,6-tris(diméthylaminoéthyle)phénol.

Dans le tableau 1, le terpolymère, l'acide de Bronsted, l'acide de Lewis, l'anhydride et l'acide aminé sont utilisés comme agent de réticulation.

Les compositions rassemblées dans le tableau 1 sont mises en oeuvre comme suit.

Dans un premier temps, pour chaque composition (C10 à C40, I10 et I20), on mélange l'agent de réticulation avec le polymère à l'état fondu, dans un mélangeur interne de type bi-vis ou Buss, la température au sein du mélangeur ne dépassant pas 130°C afin d'éviter la réticulation du polymère. Le mélange homogène ainsi obtenu est ensuite granulé.

Dans un second temps, les granulés sont ensuite introduits dans une extrudeuse monovis, et extrudés à une température maximale de 130°C, afin d'éviter toute réticulation du polymère dans l'extrudeuse.

L'extrusion se fait autour d'un fil conducteur de cuivre de section 1,5 mm². On obtient un câble électrique comprenant une couche extrudée et non réticulée en contact direct avec le fil conducteur.

Dans un troisième temps, la couche extrudée est réticulée par apport de chaleur, à une température de 200°C, en passant ledit câble électrique à l'intérieur d'un tube vapeur sous une pression de vapeur de 15 bar.

### 2. Compositions électriquement isolantes chargées

Le tableau 2 ci-dessous rassemble des compositions réticulables chargées dont les quantités des composés sont exprimées en parties en poids pour 100 parties de polymère. La composition I30 est conforme à l'invention.

**Tableau 2**

| Composition | C50 | I30 |
|---|---|---|
| PEO | 50 | 0 |
| EPDM | 50 | 0 |
| Peroxyde | 8 | 0 |
| Co-agent de réticulation | 4 | 0 |
| Polymère/Epoxy | 0 | 100 |
| Acide aminé | 0 | 0,75 |
| Kaolin | 40 | 40 |

L'origine des composés du tableau 2 est la suivante :
- PEO est un copolymère d'éthylène et d'octène, commercialisé par la société DOW Chemicals sous la référence Engage ;
- EPDM est un copolymère éthylène propylène diène monomère, commercialisé par la société EXXONMOBIL sous la référence Vistalon ;
- Peroxyde est un peroxyde de dicumyle, commercialisé par la société ARKEMA sous la référence Luperox DC40P.
- Co-agent de réticulation est le triallyl cyanurate commercialisé par la société EVONIK.
- Polymère/Epoxy est un copolymère d'éthylène et de méthacrylate de glycidyle (GMA), commercialisé par la société Arkema sous la référence Lotader AX8840, ce copolymère comprenant 8% en poids de GMA ;
- Acide aminé est un acide amino 11 undécanoïque, commercialisé par la société SIGMA-ALDRICH sous la référence acide amino 11 undécanoïque.
- Kaolin est du kaolin commercialisé par la société Imerys sous la référence Polestar 501.

La composition C50 du tableau 2 est mise en oeuvre comme suit.

Dans un premier temps, on mélange dans un mélangeur interne de type bi-vis ou Buss, tous les constituants de la composition C50, excepté le peroxyde et le co-agent de réticulation, le PEO étant à l'état fondu.

Le mélange est ensuite refroidi à l'aide d'un mélangeur à cylindres, jusqu'à une température inférieure à la température de décomposition du peroxyde (i.e. température inférieure à 160°C). Puis, le peroxyde et le co-agent de réticulation sont introduits dans le mélangeur à cylindres pour continuer l'homogénéisation. Le mélange homogène ainsi obtenu est ensuite granulé.

Dans un second temps, les granulés sont ensuite introduits dans une extrudeuse monovis, et extrudés à une température maximale de 130°C, afin d'éviter toute décomposition du peroxyde et donc toute réticulation du polymère dans l'extrudeuse.

L'extrusion se fait autour d'un fil conducteur de cuivre de section 1,5 mm². On obtient un câble électrique comprenant une couche extrudée et non réticulée en contact direct avec le fil conducteur.

Dans un troisième temps, la couche extrudée est réticulée par apport de chaleur, à une température de 200°C, en passant ledit câble électrique à l'intérieur d'un tube vapeur sous une pression de 15 bar.

La composition I30 du tableau 2 est mise en oeuvre selon le même mode opératoire que celui décrit pour les compositions du tableau 1, excepté le fait que le kaolin est ajouté en plus de l'acide aminé (cf. agent de réticulation) avec le polymère fondu, dans le mélangeur interne, en prenant soin à ce que la température du mélange ne dépasse pas 130°C. Suite à ce passage en mélangeur interne et pour rester dans des conditions opératoires similaires à celles du mélange C50, on passe le mélange I30 sur un mélangeur à cylindres.

### 3. Compositions semi-conductrices

Le tableau 3 ci-dessous rassemble des compositions réticulables semi-conductrices dont les quantités des composés sont exprimées en parties en poids pour 100 parties de polymère. La composition I40 est conforme à l'invention.

**Tableau 3**

| Composition | I40 |
|---|---|
| Polymère/Epoxy | 100 |
| Acide aminé | 0,38 |
| Antioxydants | 1,5 |
| Noir de carbone | 42,9 |

L'origine des composés du tableau 3 est la suivante :
- Polymère/Epoxy est un copolymère d'éthylène et de méthacrylate de glycidyle (GMA), commercialisé par la société Arkema sous la référence Lotader AX8840, ce copolymère comprenant 8% en poids de GMA ;
- Acide aminé est un acide amino 11 undécanoïque, commercialisé par la société SI GMA-ALDRICH sous la référence acide amino 11 undécanoïque ;
- Antioxydants est un mélange de 0,5 parties en poids d'Irganox PS802 et de 1,0 partie en poids d'Irganox 1035, ces antioxydants étant commercialisé par la société BASF ; et
- Noir de carbone est du noir de carbone commercialisé par la société Cabot sous la référence Carbon black VXC500.

La composition I40 du tableau 3 est mise en oeuvre selon le même mode opératoire que celui décrit pour les compositions du tableau 1, excepté que l'acide aminé est ajouté postérieurement au noir de carbone. Plus particulièrement, dans la première étape, tous les constituants de la composition I40, excepté l'acide aminé, sont mélangés dans le mélangeur interne. Le mélange est ensuite refroidi à l'aide d'un mélangeur à cylindres, jusqu'à une température inférieure à 130 °C pour pouvoir enfin ajouter l'acide aminé.

### 4. Caractérisation des compositions

Les tests de fluage à chaud sous charge, de résistance au claquage, et de résistivité électrique ont été réalisés sur des plaques réticulées à partir des compositions des tableaux 1, 2 et 3.

A ce titre, les constituants des différentes compositions polymères ont été mélangés dans un mélangeur interne de type Brabender ou Haake, avec le polymère à l'état fondu. Puis, le mélange a été placé dans un moule mis sous presse à une température de 120°C pendant 5 minutes sous une pression de 6 tonnes avec des intercalaires de différentes tailles pour fabriquer des préformes en fonction du type d'éprouvettes nécessaires. Puis, la réticulation des préformes est faite sous presse à une température de 200°C pendant 12 minutes sous une pression de 10 tonnes. Les plaques réticulées ainsi obtenues ont une épaisseur de 0,8-1 mm pour les tests de fluage à chaud et résistivité électrique, et de 100 ± 5 µm pour les tests de résistance au claquage.

### 4.1. Test du fluage à chaud sous charge

La norme NF EN 60811-2-1 décrit la mesure du fluage à chaud d'un matériau sous charge. Le test correspondant est communément désigné par l'anglicisme « Hot Set Test ».

Il consiste concrètement à lester une extrémité d'une éprouvette de matériau avec une masse correspondant à l'application d'une contrainte équivalente à 0,2MPa, et à placer l'ensemble dans une étuve chauffée à 200+/-1 °C pendant une durée de 15 minutes. Au terme de ce délai, on relève l'allongement à chaud sous charge de l'éprouvette, exprimé en %. La masse suspendue est alors retirée, et l'éprouvette est maintenue dans l'étuve pendant 5 nouvelles minutes. L'allongement permanent restant, également appelé rémanence, est alors mesuré avant d'être exprimé en %.

On rappelle que plus un matériau est réticulé, plus les valeurs d'allongement et de rémanence seront faibles. On précise par ailleurs que dans le cas où une éprouvette viendrait à se rompre en cours d'essai, sous l'action conjuguée de la contrainte mécanique et de la température, le résultat au test serait alors logiquement considéré comme un échec.

Les résultats du test de fluage à chaud sous charge sont rassemblés dans le tableau 4 suivant :

**Tableau 4**

| Composition | Allongement-Fluage à chaud (%) | Rémanence-Fluage à chaud (%) |
|---|---|---|
| C10 | 40 | 5 |
| C20 | Rupture | Rupture |
| C30 | Rupture | Rupture |
| C40 | Rupture | Rupture |
| C50 | 15 | 0 |
| I10 | 75 | 10 |
| I20 | 75 | 10 |
| I30 | 25 | 0 |
| I40 | 30 | 0 |

Au regard des résultats rassemblés dans le tableau 4, les compositions polymère de l'invention (I10 à I40), une fois réticulées, présentent toutes un allongement à chaud sous charge inférieur à 100%, et notamment inférieur ou égal à 75%.

### 4.2. Test de résistance au claquage

La norme utilisée pour déterminer la résistance au claquage électrique, à 20°C, des matériaux réticulés obtenus à partir des compositions des tableaux 1 et 2 est la norme IEC 62539, basée sur la distribution de Weibull.

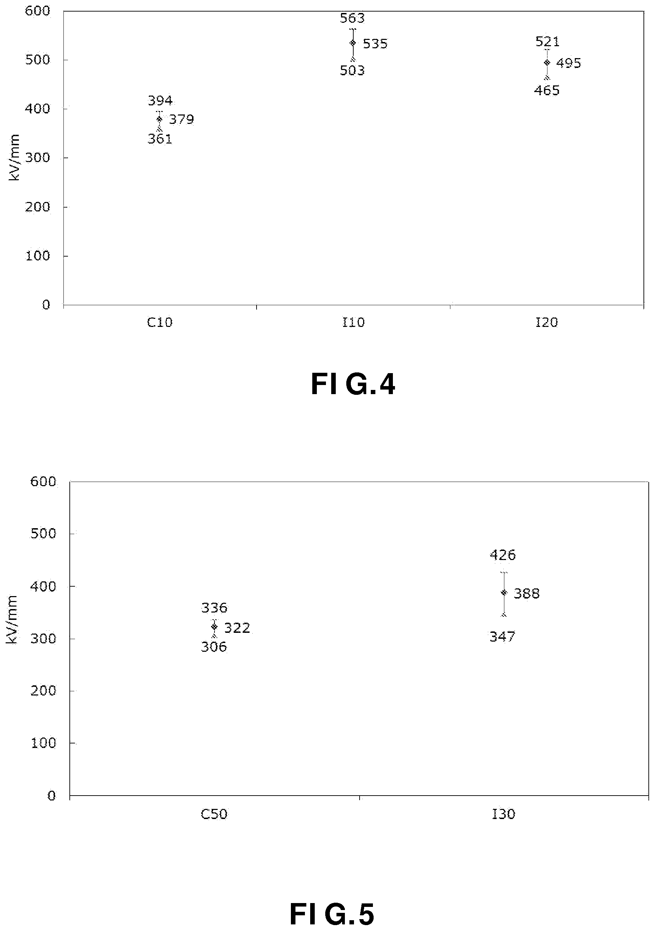

Les résultats sont rassemblés dans les figures 4 et 5. Le test de résistance au claquage a uniquement été réalisé sur les matériaux réticulés ayant passé le Hot set test selon la norme NF EN 60811-2-1 (i.e. compositions C10, C50, I10, I20 et I30). Les valeurs de résistance au claquage en kV/mm, obtenues par la méthode de Weibull et représentées dans ces figures 4 et 5 par le symbole en forme de losange, sont délimitées par des valeurs minimum (cf. symbole en forme de triangle) et des valeurs maximum (cf. symbole en forme de carré) indiquant un intervalle de confiance à 95%.

On s'aperçoit dans ces figures que la résistance au claquage en courant continu est :
- nettement améliorée pour les compositions I10 et I20 non chargées selon l'invention (respectivement 535 et 495 kV/mm) par rapport à la composition non chargée C10 (379 kV/mm);
- nettement améliorée pour la composition chargée selon l'invention I30 (388 kV/mm) par rapport à la composition chargée C50 (322 kV/mm).

Par conséquent, une couche réticulée selon l'invention permet avantageusement d'améliorer la résistance électrique aux claquages de ladite couche.

### 4.3. Test de résistivité électrique

La norme utilisée pour déterminer la résistivité électrique du matériau réticulé obtenu à partir de la composition du tableau 3 est la norme IEC 60840.

La résistivité électrique de la couche semi-conductrice réticulée obtenue à partir de la composition I40 est de 50 Ω.m (ohm.mètre), ce qui correspond à une valeur de résistivité électrique tout à fait satisfaisante par rapport au domaine classique de résistivité électrique des couches semi-conductrices de l'art antérieur classiquement inférieure à 0,5.10³ Ω.m (i.e. une conductivité électrique de 2.10⁻³ S/m).

## Revendications

1. Dispositif électrique (1,20,30) comprenant une couche réticulée (3, 4, 5, 21, 22, 23, 31, 32) obtenue à partir d'une composition polymère comprenant au moins un polymère comprenant au moins une fonction époxy, **caractérisé en ce que** la composition polymère comprend en outre un composé non polymérique en tant qu'agent de réticulation comprenant au moins une fonction réactive apte à réagir avec la fonction époxy dudit polymère pour permettre la réticulation dudit polymère, l'agent de réticulation étant choisi parmi :
- un composé non polymérique comprenant au moins une fonction amine et au moins une fonction carboxyle,
- un composé non polymérique comprenant au moins une fonction anhydride, et un catalyseur de réticulation, et
- un de leurs mélanges.

2. Dispositif selon la revendication 1, **caractérisé en ce qu'**il est un câble électrique (1) comprenant un élément électriquement conducteur allongé (2), entouré par ladite couche réticulée (3, 4, 5).

3. Dispositif selon la revendication 1, **caractérisé en ce qu'**il est un accessoire (20, 30) pour câble électrique, ledit accessoire comprenant ladite couche réticulée (21, 22, 23, 31, 32).

4. Dispositif selon la revendication 3, **caractérisé en ce que** l'accessoire est une jonction (20) ou une terminaison (30), pour câble électrique.

5. Dispositif selon l'une quelconque des revendications précédentes, **caractérisé en ce que** le polymère comprend au moins un composé choisi parmi les esters de glycidyle.

6. Dispositif selon l'une quelconque des revendications précédentes, **caractérisé en ce que** le polymère comprend au plus 10% en poids de fonction époxy.

7. Dispositif selon l'une quelconque des revendications précédentes, **caractérisé en ce que** le polymère comprend au moins 0,1% en poids de fonction époxy.

8. Dispositif selon l'une quelconque des revendications précédentes, **caractérisé en ce que** la fonction époxy est greffée sur le polymère.

9. Dispositif selon l'une quelconque des revendications précédentes, **caractérisé en ce que** le polymère comprenant au moins une fonction époxy est un copolymère obtenu à partir d'au moins deux monomères, l'un des monomères comprenant ladite fonction époxy.

10. Dispositif selon l'une quelconque des revendications précédentes, **caractérisé en ce que** le polymère comprend en outre au moins une fonction acrylate.

11. Dispositif selon l'une quelconque des revendications précédentes, **caractérisé en ce que** la fonction amine de l'agent de réticulation est une amine primaire ou secondaire.

12. Dispositif selon l'une quelconque des revendications précédentes, **caractérisé en ce que** l'agent de réticulation est un acide aminé.

13. Dispositif selon l'une quelconque des revendications précédentes, **caractérisé en ce que** le catalyseur de réticulation est du type base de Lewis.

14. Dispositif selon l'une quelconque des revendications précédentes, **caractérisé en ce que** la composition polymère comprend en outre une charge.

15. Dispositif selon l'une quelconque des revendications précédentes, **caractérisé en ce que** la couche réticulée est une couche électriquement isolante (4, 23, 32).

16. Dispositif selon l'une quelconque des revendications précédentes, **caractérisé en ce que** la couche réticulée est une couche semi-conductrice (3, 5, 21, 22, 31).

17. Dispositif selon l'une quelconque des revendications précédentes, **caractérisé en ce qu'**il comprend une première couche semi-conductrice (3) entourant l'élément électriquement conducteur allongé (2), une couche électriquement isolante (4) entourant la première couche semi-conductrice (3), et une deuxième couche semi-conductrice (5) entourant la couche électriquement isolante (4), la couche réticulée étant au moins l'une de ces trois couches.

## Patentansprüche

1. Elektrische Vorrichtung (1 ,20 ,30), umfassend eine vernetzte Schicht (3, 4, 5, 21, 22, 23, 31, 32) aus einer Polymerzusammensetzung, die mindestens ein mindestens einen Epoxidanteil umfassendes Polymer umfasst, **dadurch gekennzeichnet, dass** die Polymerzusammensetzung ferner als Vernetzungsmittel eine nicht polymere Zusammensetzung umfasst, die mindestens einen reaktionsfähigen Anteil umfasst,der dazu geeignet ist, mit dem Epoxidanteil des Polymers eine Reaktion einzugehen, um die Vernetzung des Polymers zu ermöglichen, wobei das Vernetzungsmittel aus der nachfolgenden Gruppe gewählt ist:
- eine nicht polymere Verbindung, umfassend mindestens einen Aminanteil und mindestens einen Carboxylanteil,
- eine nicht polymere Verbindung, umfassend mindestens einen Anhydridanteil und einen Reaktionskatalysator, und
- eine Mischung davon.

2. Vorrichtung nach Anspruch 1, **dadurch gekennzeichnet, dass** es sich dabei um ein Stromkabel (1) handelt, das ein von der vernetzten Schicht (3, 4, 5) umgebenes längliches elektrisch leitendes Element (2) umfasst.

3. Vorrichtung nach Anspruch 1, **dadurch gekennzeichnet**, das es sich dabei um ein Zubehörteil (20, 30) für ein Stromkabel handelt, wobei das Zubehörteil die vernetzte Schicht (21, 22, 23, 31, 32) umfasst.

4. Vorrichtung nach Anspruch 3, **dadurch gekennzeichnet, dass** es sich beim Zubehörteil um einen Anschluss (20) oder einen Abschluss (30) eines Stromkabels handelt.

5. Vorrichtung nach einem der vorstehenden Ansprüche,
**dadurch gekennzeichnet, dass** das Polymer mindestens eine Verbindung umfasst, die aus den Glycidylestern gewählt ist.

6. Vorrichtung nach einem der vorstehenden Ansprüche,
**dadurch gekennzeichnet, dass** das Polymer zu höchstens 10 Gew. % einen Epoxidanteil umfasst.

7. Vorrichtung nach einem der vorstehenden Ansprüche,
**dadurch gekennzeichnet, dass** das Polymer zu mindestens 0,1 Gew. % einen Epoxidanteil umfasst.

8. Vorrichtung nach einem der vorstehenden Ansprüche,
**dadurch gekennzeichnet, dass** der Epoxidanteil auf das Polymer aufgepfropft ist.

9. Vorrichtung nach einem der vorstehenden Ansprüche,
**dadurch gekennzeichnet, dass** das Polymer, das mindestens einen Epoxidanteil umfasst, ein aus mindestens zwei Monomeren erzeugtes Copolymer ist, wobei eines der Monomere den Epoxidanteil umfasst.

10. Vorrichtung nach einem der vorstehenden Ansprüche, **dadurch gekennzeichnet, dass** das Polymer ferner mindestens einen Acrylatanteil umfasst.

11. Vorrichtung nach einem der vorstehenden Ansprüche,
**dadurch gekennzeichnet, dass** der Aminanteil des Vernetzungsmittels ein primäres oder sekundäres Amin ist.

12. Vorrichtung nach einem der vorstehenden Ansprüche,
**dadurch gekennzeichnet, dass** das Vernetzungsmittel eine Aminosäure ist.

13. Vorrichtung nach einem der vorstehenden Ansprüche,
**dadurch gekennzeichnet, dass** der Vernetzungskatalysator von der Art einer Lewis'schen Base ist.

14. Vorrichtung nach einem der vorstehenden Ansprüche,
**dadurch gekennzeichnet, dass** die Polymerzusammensetzung ferner eine Ladung umfasst.

15. Vorrichtung nach einem der vorstehenden Ansprüche,
**dadurch gekennzeichnet, dass** die vernetzte Schicht eine elektrisch isolierende Schicht (4, 23, 32) ist.

16. Vorrichtung nach einem der vorstehenden Ansprüche,
**dadurch gekennzeichnet, dass** die vernetzte Schicht eine halbleitende Schicht (3, 5, 21, 22, 31) ist.

17. Vorrichtung nach einem der vorstehenden Ansprüche,
**dadurch gekennzeichnet, dass** sie umfasst: eine erste halbleitende Schicht (3), die das längliche elektrisch leitende Element (2) umgibt, eine elektrisch isolierende Schicht (4), die die erste halbleitende Schicht (3) umgibt, und eine zweite halbleitende Schicht (5), die die elektrisch isolierende Schicht (4) umgibt, wobei die vernetzte Schicht mindestens einer dieser drei Schichten ist.

## Claims

1. Electrical device (1, 20, 30) comprising a crosslinked layer (3, 4, 5, 21, 22, 23, 31, 32) obtained from a polymer composition comprising at least one polymer comprising at least one epoxy function, **characterized in that** the polymer composition further comprises a non-polymeric compound as a crosslinking agent comprising at least one reactive function capable of reacting with the epoxy function of said polymer to allow the crosslinking of said polymer, the crosslinking agent being selected from:
- a non-polymeric compound comprising at least one amine function and at least one carboxyl function,
- a non-polymeric compound comprising at least one anhydride functional group, and a crosslinking catalyst, and
- one of their mixtures.

2. Device according to claim 1, **characterized in that** it is an electric cable (1) comprising an elongated electrically-conductive element (2), surrounded by said crosslinked layer (3, 4, 5).

3. Device according to claim 1, **characterized in that** it is an accessory (20, 30) for an electric cable, said accessory comprising said crosslinked layer (21, 22, 23, 31, 32).

4. Device according to claim 3, **characterized in that** the accessory is a junction (20) or a termination (30) for an electric cable.

5. Device according to any one of the preceding claims, **characterized in that** the polymer comprises at least one compound selected from glycidyl esters.

6. Device according to any one of the preceding claims, **characterized in that** the polymer comprises at most 10% by weight of epoxy function.

7. Device according to any one of the preceding claims, **characterized in that** the polymer comprises at least 0.1% by weight of epoxy function.

8. Device according to any one of the preceding claims, **characterized in that** the epoxy function is grafted onto the polymer.

9. Device according to any one of the preceding claims, **characterized in that** the polymer comprising at least one epoxy function is a copolymer obtained from at least two monomers, one of the monomers comprising said epoxy function.

10. Device according to any one of the preceding claims, **characterized in that** the polymer further comprises at least one acrylate function.

11. Device according to any one of the preceding claims, **characterized in that** the amine function of the crosslinking agent is a primary or secondary amine.

12. Device according to any one of the preceding claims, **characterized in that** the crosslinking agent is an amino acid.

13. Device according to any one of the preceding claims, **characterized in that** the crosslinking catalyst is of the Lewis base type.

14. Device according to any one of the preceding claims, **characterized in that** the polymer composition further comprises a filler.

15. Device according to any one of the preceding claims, **characterized in that** the crosslinked layer is an electrically insulating layer (4, 23, 32).

16. Device according to any one of the preceding claims, **characterized in that** the crosslinked layer is a semi-conductive layer (3, 5, 21, 22, 31).

17. Device according to any one of the preceding claims, **characterized in that** it comprises a first semiconductor layer (3) surrounding the elongated electrically-conductive element (2), an electrically insulating layer (4) surrounding the first semiconductor layer. conductor (3), and a second semiconductor layer (5) surrounding the electrically insulating layer (4), the crosslinked layer being at least one of these three layers.
